# EUROPÄISCHE PATENTSCHRIFT

(11) **EP 3 209 928 B1**
(45) Veröffentlichungstag und Bekanntmachung des Hinweises auf die Patenterteilung: **31.07.2019**
(21) Anmeldenummer: 15793681.6
(22) Anmeldetag: 13.10.2015
(51) Int. Cl.: F21S 41/176, F21S 41/675

(54) **VERFAHREN ZUM ERZEUGEN EINER LICHTVERTEILUNG AUF EINER FAHRBAHN MIT HILFE EINES KFZ-SCHEINWERFERS**
METHOD FOR GENERATING A LIGHT DISTRIBUTION ON A ROAD USING A MOTOR VEHICLE HEADLIGHT
PROCÉDÉ DE RÉALISATION D'UNE DISTRIBUTION DE LUMIERE SUR UNE CHAUSSÉE AU MOYEN D'UN PHARE DE VÉHICULE AUTOMOBILE

(30) Priorität: 21.10.2014 AT 507512014
(43) Veröffentlichungstag der Anmeldung: 30.08.2017
(73) Patentinhaber: ZKW Group GmbH, 3250 Wieselburg (AT)
(72) Erfinder: REISINGER, Bettina, 3300 Amstetten (AT); REINPRECHT, Markus, 3384 Pielachhäuser (AT); MITTERLEHNER, Thomas, 3240 Mank (AT)
(74) Vertreter: Patentanwaltskanzlei Matschnig & Forsthuber OG
(86) Internationale Anmeldenummer: PCT/AT2015/050253
(87) Internationale Veröffentlichungsnummer: WO 2016/061599

(56) Entgegenhaltungen:
- EP-A1- 2 581 648
- EP-A1- 2 581 648
- WO-A1-2015/146309
- DE-A1-102010 028 949

## Beschreibung

Die Erfindung bezieht sich auf ein Verfahren zum Erzeugen einer Lichtverteilung auf einer Fahrbahn mit Hilfe eines KFZ-Scheinwerfers, bei welchem zumindest ein in seiner Intensität modulierbarer Laserstrahl mit Hilfe zumindest eines angesteuerten Strahlablenkmittels in zumindest einer Koordinatenrichtung scannend auf ein Lichtkonversionsmittel gelenkt wird, um an diesem ein Leuchtbild zu erzeugen, das mit Hilfe einer Projektionsoptik als Lichtbild auf die Fahrbahn projiziert wird, wobei das aus dem Laserstrahl mit Hilfe des Strahlablenkmittels erzeugte Bild durch Umlenkung des Laserstrahls mittels eines Bildfaltungsmittels geteilt wird und die Teilbilder spiegelbildlich zu einer Teilungslinie auf das Lichtkonversionsmittel zu einem gesamten Leuchtbild zusammengesetzt projiziert werden.

Ebenso bezieht sich die Erfindung auf einen Scheinwerfer für Kraftfahrzeuge mit zumindest einer Laserlichtquelle, deren Laserstrahl über ein Strahlablenkmittel scannend auf zumindest ein Lichtkonversionsmittel gelenkt wird, welches eine Phosphor zur Lichtkonversion aufweist, und mit einem Projektionssystem zur Projektion des an dem zumindest einem Lichtkonversionsmittel erzeugten Leuchtbildes als Lichtbild auf die Fahrbahn, wobei zwischen dem Strahlablenkmittel und dem Lichtkonversionsmittel ein Bildfaltungsmittel angeordnet ist, wobei das aus dem Laserstrahl mit Hilfe des Strahlablenkmittels erzeugte Bild durch Umlenkung des Laserstrahls mittels des Bildfaltungsmittels geteilt wird und die Teilbilder spiegelbildlich zu einer Teilungslinie auf das Lichtkonversionsmittel zu einem gesamten Leuchtbild zusammengesetzt projiziert werden.

Als Beispiel für einen Scheinwerfer nach dem Stand der Technik sei der in der EP 2 063 170 A2 gezeigte genannt, bei welchem zur Ausleuchtung der Fahrbahn mit einem blendfreien adaptiven Fernlicht bestimmte Bereiche in Abhängigkeit von anderen Verkehrsteilnehmern bzw. in Abhängigkeit von Umgebungsparametern, wie Eigengeschwindigkeit, Dämmerung, Wetter, etc., ausgespart werden können. Hier wird der Strahl eines Lasers über einen in zwei Raumrichtungen bewegbaren Mikrospiegel auf eine Leuchtfläche gelenkt, die zur Konvertierung des Laserlichts in vorzugsweiser weißes Licht den genannten Phosphor enthält. Mittels einer Linse wird das Leuchtbild der Leuchtfläche als Lichtbild auf die Fahrbahn projiziert.

Die derzeit verwendbaren Mikrospiegel schwingen resonant in zwei Achsen oder auch nur in einer Achse, wobei jedoch die hellsten Punkte in der Lichtverteilung am Rande des Scanbereichs liegen. Die Intensität entspricht in beiden Achsen je einer Sinusschwingung, mit dem Maximum an dem Umkehrpunkt des Spiegels, da dort die Geschwindigkeit am langsamsten ist. Dieses Phänomen steht jedoch im Gegensatz zu der für einen Scheinwerfer angestrebten Lichtverteilung, deren Intensitätsverteilung dazu invers sein sollte. Genau in der Mitte der Lichtverteilung werden hohe Intensitäten benötigt, wozu in dem verwendeten System eine hohe Laserleistung, z.B. eine große Anzahl von Laserdioden, bereitgestellt werden muss, um am dunkelsten Bereich der Lichtverteilung genügend hohe Intensität zu erreichen. Zum Rand hin wird dann durch die Modulation die Laserlichtquelle auf den jeweils benötigten Wert gedimmt und im Mittel können dadurch nur ca. 13 % der installierten Laserleistung genutzt werden.

Das Dokument DE 10 2010 028949 A1 offenbart einen Scheinwerfer für Kraftfahrzeuge mit zumindest einer Laserlichtquelle, deren Laserstrahl über ein Strahlablenkmittel scannend auf zumindest ein Lichtkonversionsmittel gelenkt wird, welches einen Phosphor zur Lichtkonversion aufweist, und mit einem Projektionssystem zur Projektion des an dem zumindest einem Lichtkonversionsmittel erzeugten Leuchtbildes als Lichtbild auf die Fahrbahn.

Weiters zeigt das Dokument EP 2 581 648 A1 ein Bildfaltungsmittel, welches ein gescanntes Zwischenbild teilt, jedoch wird eine Faltung nur bei einem Teilbild bewirkt, wobei zwei Teilbilder überlappend, nicht jedoch spiegelbildlich zusammengesetzt werden. Dies auf der Fahrbahn, nicht jedoch auf einem Lichtkonversionsmittel.

Ein Scheinwerfer der eingangs zitierten Art geht auch aus dem Dokument WO/2015146309 i.S. des Art. 54(3) EPÜ als bekannt hervor. Dieser Scheinwerfer besitzt ein Bildfaltungsmittel, wie beispielsweise einen V-förmigen Spiegel oder ein diamantförmiges Prisma, wobei wegen der nie vollkommen Ausbildung von Kanten im Bereich des Teilungs-/Faltungszentrums unerwünschtes Streulicht auftreten kann.

Eine Aufgabe der Erfindung liegt nun darin, eine gleichmäßig Lichtverteilung für das auf die Straße projizierte Licht zu erreichen, ohne dass dazu eine übermäßig hohe Laserleistung installiert werden muss und ohne dass es ausgehend von dem Bereich des Teilungs-/Faltungszentrums zu einem unerwünschten Streulicht kommt.

Diese Aufgabe wird mit einem Verfahren der eingangs genannten Art erreicht, bei welchem erfindungsgemäß der Laserstrahl in einem Bereich des Teilungs-/Faltungszentrums optisch/elektrisch ausgeblendet wird.

In vielen Anwendungsfällen ist es vorteilhaft, wenn der Laserstrahl mit Hilfe des Strahlablenkmittels in zwei zueinander im Wesentlichen orthogonale Richtungen abgelenkt wird.

Bei anderen Anwendungen kann es zweckmäßig sein, wenn der Laserstrahl zur Erzeugung eines Lichtbandes als Leuchtbild aufgefächert wird.

Um ein zusätzliches Verschieben des gesamten Leuchtbildes zu ermöglichen, kann es angebracht sein, wenn das Bildfaltungsmittel zum Verschieben des Leuchtbildes in zumindest einer Koordinatenrichtung mit Hilfe eines Aktuators verstellt wird.

Vorteilhaft ist es auch, wenn durch Änderung des Abstandes des Bildfaltungsmittels von dem Lichtkonversionsmittel der Abstand der Teilbilder voneinander bestimmt wird. Auf diese Weise können beispielsweise durch Überlappen von Bildbereichen hellere Areale erzeugt werden.

Ebenso wird die Aufgabe mit einem Scheinwerfer der oben angegebenen Art gelöst, bei welchem erfindungsgemäß das Bildfaltungsmittel in einem Bereich des Teilungs-/Faltungszentrums nicht reflektierend ausgebildet ist oder der Laserstrahl (2) in einem Bereich des Teilungs-/Faltungszentrums (4z) optisch oder elektrisch ausgeblendet wird.

Dabei sollte vorgesehen sein, dass der Bereich des Teilungs-/Faltungszentrums eine Abmessung aufweist, die zumindest der Breite des Laserstrahls entspricht.

Der Kern der Erfindung ist somit, dass auf Grund der nicht reflektierenden Ausbildung im Teilungs-/Faltungszentrum an dieser kritischen Stelle ein Ausblenden erfolgt und Streulicht vermieden wird.

Falls das Bildfaltungsmittel als hohlkegelförmiger Spiegel ausgebildet ist, kann das Strahlenbild prinzipiell in jeder Richtung geteilt und gefaltet werden.

Zur Teilung und Faltung in einer bevorzugten Koordinatenrichtung ist es zweckmäßig, wenn das Bildfaltungsmittel als Spiegel mit zumindest zwei unter einem Winkel zueinander geneigten ebenen Flächen ausgebildet ist. Dabei ist es zweckmäßig, wenn der Winkel 5° bis 45°, bevorzugt zwischen 10° und 15° beträgt. Andererseits kann es in manchen Fällen von Vorteil sein, wenn das Bildfaltungsmittel als kegelförmiges Prisma oder als Dreiecksprisma bzw. Pyramidenprisma ausgebildet ist.

Bei einer praxiskonformen Ausführung kann vorgesehen sein, dass das Verhältnis der optisch wirksamen Abmessungen des Bildfaltungsmittels und des Lichtkonversionsmittels in zwei Strahlablenkrichtungen zumindest annähernd gleich ist.

Eine zusätzliche Verschiebung des gesamten Bildes ist möglich, falls das Bildfaltungsmittel in zumindest einer Koordinatenrichtung beweglich gelagert und mit Hilfe eines Aktuators verstellbar ist.

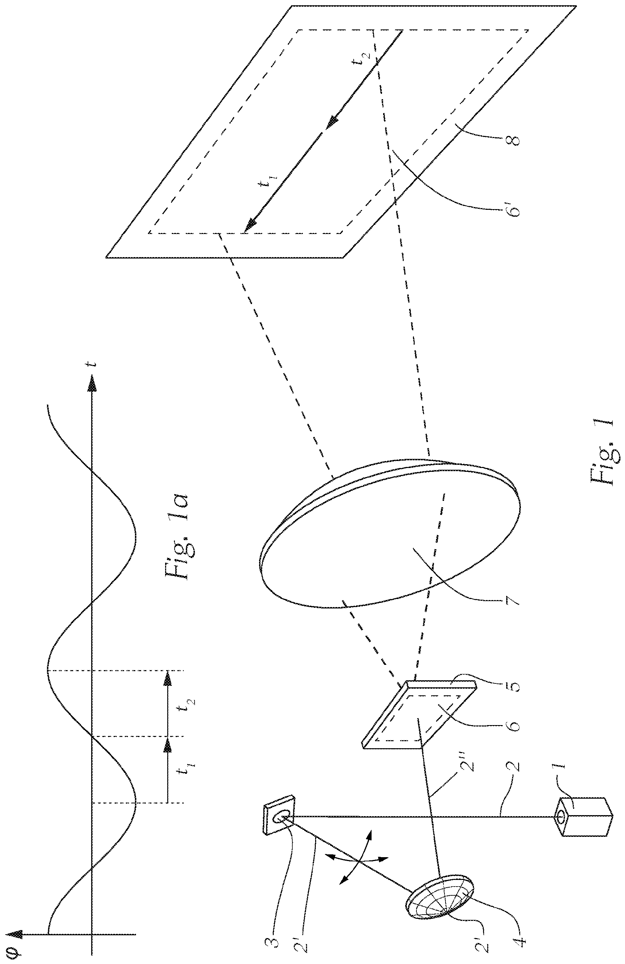

Die Erfindung samt weiterer Vorteile ist im Folgenden an Hand beispielsweiser Ausführungsformen näher erläutert, die in der Zeichnung veranschaulicht sind. In dieser zeigen
Fig. 1 die für die Erfindung wesentlichen Komponenten eines Scheinwerfers und deren Zusammenhang in einer schematischen Darstellung,
Fig. 1a in einem Diagramm den zeitlichen Ablenkverlauf des Strahlablenkmittels in einer Koordinatenrichtung für zwei aufeinanderfolgende Zeitabschnitte,
in einem Kraftfahrzeug, wie insbesondere einem PKW oder Motorrad, ermöglichen. Lichttechnischer Ausgangspunkt des Scheinwerfers ist eine Laserlichtquelle 1, die einen Laserstrahl 2 abgibt, und welcher eine hier nicht gezeigte Laseransteuerung zugeordnet ist, welche zur Stromversorgung sowie zur Überwachung der Laseremission oder z.B. zur Temperaturkontrolle dient und auch zum Modulieren der Intensität des abgestrahlten Laserstrahls eingerichtet ist. Unter "Modulieren" wird in Zusammenhang mit der vorliegenden Erfindung verstanden, dass die Intensität der Laserlichtquelle geändert werden kann, sei es kontinuierlich oder gepulst, im Sinne eines Ein- und Ausschaltens. Wesentlich ist, dass die Lichtleistung analog dynamisch geändert werden kann, je nachdem, an welcher Winkelposition ein später näher beschriebener Spiegel steht. Zusätzlich gibt es noch die Möglichkeit des Ein- und Ausschaltens für eine gewisse Zeit, um definierte Stellen nicht zu beleuchten oder auszublenden. Ein Beispiel eines dynamischen Ansteuerungskonzepts zur Erzeugung eines Bildes durch einen scannenden Laserstrahl ist etwa in der österreichischen Patentanmeldung A 50454/2013 der Anmelderin vom 16. Juli 2013 beschrieben. Die Laserlichtquelle enthält in der Praxis oft mehrere Laserdioden, beispielsweise sechs von z.B. je 1 Watt, um die gewünschte Leistung bzw. den geforderten Lichtstrom zu erreichen.

Die Laserlichtquelle 1 gibt beispielsweise blaues oder UV-Licht ab, und besitzt üblicherweise eine Kollimatoroptik sowie eine Fokussieroptik, wobei die Ausbildung der Optik unter anderem von der Art, Anzahl und der räumlichen Platzierung der verwendeten Laserdioden, von der erforderlichen Strahlqualität und von der gewünschten Laserspotgröße am Lichtkonversionsmittel ab hängt.

Der fokussierte bzw. geformte Laserstrahl 2 trifft auf einen Mikrospiegel 3 und wird über Bildfaltungsmittel 4, im vorliegenden Beispiel einen hohlkegelförmigen Hilfsspiegel, auf ein Lichtkonversionsmittel 5 reflektiert, welches z.B. in bekannter Weise einen Phosphor zur Lichtkonversion aufweist. Der Phosphor wandelt beispielsweise blaues oder UV-Licht in "weißes" Licht um. Unter "Phosphor" wird in Zusammenhang mit der vorliegenden Erfindung ganz allgemein ein Stoff oder eine Stoffmischung verstanden, welche Licht einer Wellenlänge in Licht einer anderen Wellenlänge oder eines Wellenlängengemisches, insbesondere in "weißes" Licht, umwandelt, was unter dem Begriff "Wellenlängenkonversion" subsumierbar ist.

Man verwendet Lumineszenz-Farbstoffe, wobei die Ausgangswellenlänge im Allgemeinen kürzer und damit energiereicher als das emittierte Wellenlängengemisch ist. Der gewünschte Weißlichteindruck entsteht dabei durch additive Farbmischung. Dabei wird unter "weißes Licht" Licht einer solchen Spektralzusammensetzung verstanden, welches beim Menschen den Farbeindruck "weiß" hervorruft. Der Begriff "Licht" ist natürlich nicht auf für das menschliche Auge sichtbare Strahlung eingeschränkt. Für das Lichtkonversionsmittel kommen beispielsweise Optokeramiken in Frage, das sind transparente Keramiken, wie beispielsweise YAG:Ce (ein Yttrium-Aluminium-Granat mit Cer dotiert).

Angemerkt sei an dieser Stelle, dass in der Zeichnung das Lichtkonversionsmittel als durchscheinende Phosphorfläche gezeigt ist, auf welcher der scannende Laserstrahl bzw. scannende Laserstrahlen ein Bild erzeugen, das von der gegenüberliegenden Seite ausgehend projiziert wird. Es ist jedoch auch möglich, einen Phosphor zu verwenden, bei welchem der Laserstrahl ein Bild erzeugt, das von jener Seite des Phosphors ausgehend projiziert wird, die von dem Laserstrahl überstrichen wird. Es sind mit anderen Worten sowohl reflektierende als auch transmissive Strahlengänge möglich, wobei letztlich auch eine Mischung von reflektierenden und transmissiven Strahlengängen nicht ausgeschlossen ist.

Der im vorliegenden Beispiel um zwei Achsen schwingende Mikrospiegel 3, ganz allgemein Strahlablenkmittel 3 genannt, wird mit Hilfe von Treibersignalen angesteuert und z.B. in zwei zueinander orthogonalen Richtungen in Schwingungen konstanter, in vielen Fällen jedoch in x-Richtung und y-Richtung unterschiedlicher Frequenz versetzt, wobei diese Schwingungen insbesondere den mechanischen Eigenfrequenzen des Mikrospiegels in den jeweiligen Achsen entsprechen können. Es sei angemerkt, dass auch andere Strahlablenkmittel, wie z.B. bewegbare Prismen, Verwendung finden können, wenngleich die Verwendung eines Mikrospiegels bevorzugt wird.

Der Laserstrahl 2" scannt somit über das Lichtkonversionsmittel 5, das im Allgemeinen eben ist, jedoch nicht eben sein muss, und erzeugt ein Leuchtbild 6 mit einer vorgegebenen Lichtverteilung. Dieses Leuchtbild 6 wird nun mit einem Projektionssystem 7 als Lichtbild 6' auf die Fahrbahn 8 projiziert. Dabei wird die Laserlichtquelle mit hoher Frequenz gepulst oder kontinuierlich angesteuert, sodass entsprechend der Position des Mikrospiegels beliebige Lichtverteilungen nicht nur einstellbar sind - beispielsweise Fernlicht/Abblendlicht - sondern auch rasch änderbar sind, wenn dies eine besondere Gelände- oder Fahrbahnsituation erfordert, beispielsweise wenn Fußgänger oder entgegenkommende Fahrzeuge durch Sensoren erfasst werden und dementsprechend eine Änderung der Geometrie und/oder Intensität des Lichtbildes 6' der Fahrbahnausleuchtung erwünscht ist. Das Projektionssystem 7 ist hier vereinfacht als Linse dargestellt und der Begriff "Fahrbahn" wird hier zur vereinfachten Darstellung verwendet, denn selbstverständlich hängt es von den örtlichen Gegebenheiten ab, ob sich das Lichtbild 6' tatsächlich auf der Fahrbahn befindet oder auch darüber hinaus erstreckt. Prinzipiell entspricht das Bild 6' einer Projektion auf eine vertikale Fläche, und als solche ist hier auch die "Fahrbahn" dargestellt, entsprechend der einschlägigen Normen, die sich auf die KFZ-Beleuchtungstechnik beziehen.

In Fig. 1a ist die Winkelablenkung des Mikrospiegels 3 hier, hier in der X-Richtung, dargestellt und es sind zwei aufeinanderfolgende Halbperioden mit t₁ und t₂ bezeichnet. Wegen der besonderen Geometrie des Bildfaltungsmittels 4, in Fig. 1 eines hohlkegelförmigen Spiegels, werden auf dem Lichtkonversionsmittel 5 und folglich auf dem auf die Straße projizierten Lichtbild 6' durch eine entsprechende Ablenkung des Laserstrahls 2" zwei Teilbilder erzeugt, in Fig. 1 während der ersten Halbperiode t₁ ein linkes Teilbild und während der zweiten Halbperiode t₂ ein rechtes Teilbild.

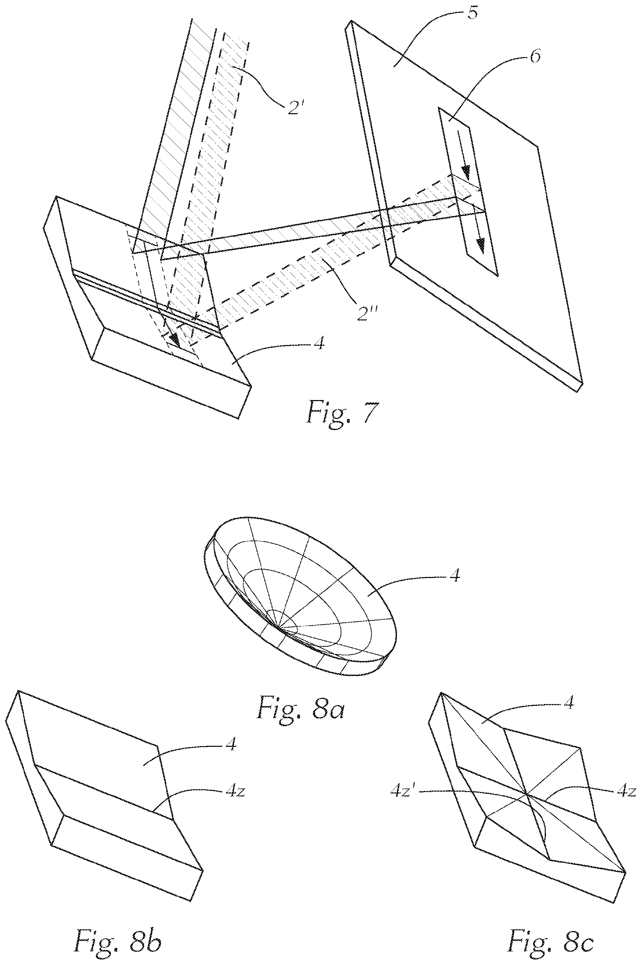

Ob die zu den Zeiten t₁ und t₂ gehörigen Teilbilder in Abstand voneinander, direkt aneinander oder einander überlappend liegen wird durch den Abstand des Bildfaltungsmittels 4 von dem Lichtkonversionsmittel 5 sowie vom Winkel β bestimmt, wobei dieser Abstand der Länge des in Fig. 1 eingezeichneten Laserstrahls 2"entspricht. Im Allgemeinen, vor allem bei Ausblendvorgängen, ist es vorteilhaft, wenn die genannten Bereiche direkt aneinandergrenzen. Ein Überlappen, dass eintritt, falls das Lichtkonversionsmittels 4 näher an dem Bildfaltungsmittel 4 liegt, wobei dieser Bereich in einem Schwenkvorgang zweimal von dem Laserstrahl durchlaufen wird, kann andererseits durchaus erwünscht sein, um einen Bereich der Ausleuchtung mit höherer Intensität zu realisieren. Bei Verwendung von weiter unten gezeigten Bildfaltungsmitteln, z.B. Fig. 8c, die um mehr als eine Linie teilen und falten, gelten die obigen Überlegungen bezüglich eines Überlappens sinngemäß.

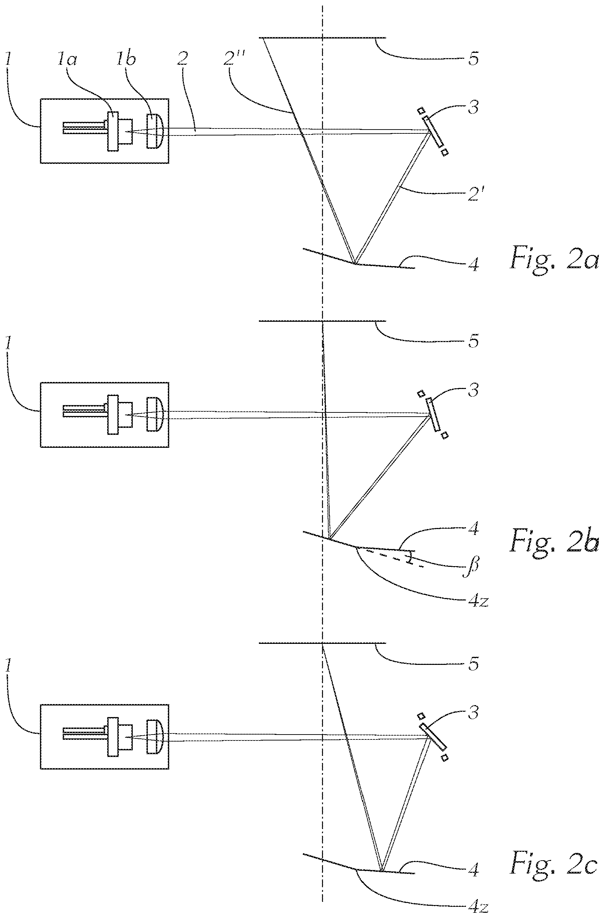

Anhand der drei untereinanderliegenden Darstellungen Fig. 2a, b, c ist dies noch besser ersichtlich. Die Laserlichtquelle 1, die hier beispielhaft aus einer Laserdiode 1a und einer Fokussieroptik 1b bestehend gezeigt ist, sendet gemäß Fig. 2a den Laserstrahl 2 aus, der an dem schwingenden Mikrospiegel 3 reflektiert wird und als reflektierter Strahl 2' auf das Bildfaltungsmittel 4 gelenkt wird. Im vorliegenden Beispiel ist dieses Bildfaltungsmittel 4 als Spiegel gezeigt, der nicht eine durchgehend ebene Fläche aufweist sondern zwei zueinander leicht, unter einem Winkel β geneigte Teilflächen, welche längs einer Knicklinie 4z zusammenstoßen, sofern es nur um die Faltung des Bildes in einer Koordinatenrichtung geht. Es ist jedoch möglich, ein solches Bildfaltungsmittel mit zwei zueinander geneigten Flächen in Systemen mit einer Spiegelablenkung in zwei Koordinatenrichtungen zu verwenden.

Im Falle eines hohlkegelförmigen Spiegels (Fig. 1) ist dieses Faltungszentrum keine Linie sondern ein Punkt, der gleichfalls mit 4z bezeichnet ist.

Die Fokussieroptik 1b ist so ausgelegt, dass deren Brennweite vorteilhafterweise in den Mittenbereich des Lichtkonversionsmittels 5 fällt. Auf diese Weise wird sichergestellt, dass aufgrund der durch das Bildfaltungsmittel bedingten, unterschiedlich langen Strahlengänge der jeweiligen Laserstrahlen zumindest jener Bereich auf dem Phosphor scharf fokussiert wird, der die Mitte der gewünschten Lichtverteilung bildet. Damit ist es möglich, Verkehrsteilnehmer in diesem Bereich "feiner" auszublenden.

Was den Winkel β betrifft, so ist dieser abhängig von dem Abstand des Bildfaltungsmittels 4 zum Phosphor des Lichtkonversionsmittels, dessen Abmessungen, vom Einfallswinkel des Laserstrahls sowie von der Amplitude des Mikrospiegels und ganz allgemein der genauen geometrischen Anordnung der Bauteile zueinander. Dieser Winkel β kann zwischen 1 und 90° betragen und liegt in der Praxis, um einen kompakten Aufbau realisieren zu können, bevorzugt zwischen 5° und 45°, besonders bevorzugt zwischen 10° und 15°.

In Hinblick auf eine kompakte, raumsparende Bauweise ist es vorteilhaft, eine Laserdiode bzw. Laserdioden der Laserlichtquelle 1 so anzuordnen, dass sie, wie in den Figuren gezeigt, ihre Hauptabstrahlrichtung normal zur Phosphorebene bzw. zur optischen Achse des dem Phosphor nachgeordneten Abbildungssystems besitzen oder gegebenenfalls eine zusätzliche Umlenkeinheit für einen solchen Strahlengang sorgt.

Zurückkommend auf Fig. 2 erkennt man, dass in den Extremstellungen des Mikrospiegels 3 der Laserstrahl 2' so abgelenkt wird, dass er als abgelenkter Strahl 2" in die Mitte des Lichtkonversionsmittels 5 fällt. Die beiden Extremstellungen des Mikrospiegels sind in den Fig. 2b und 2c ersichtlich.

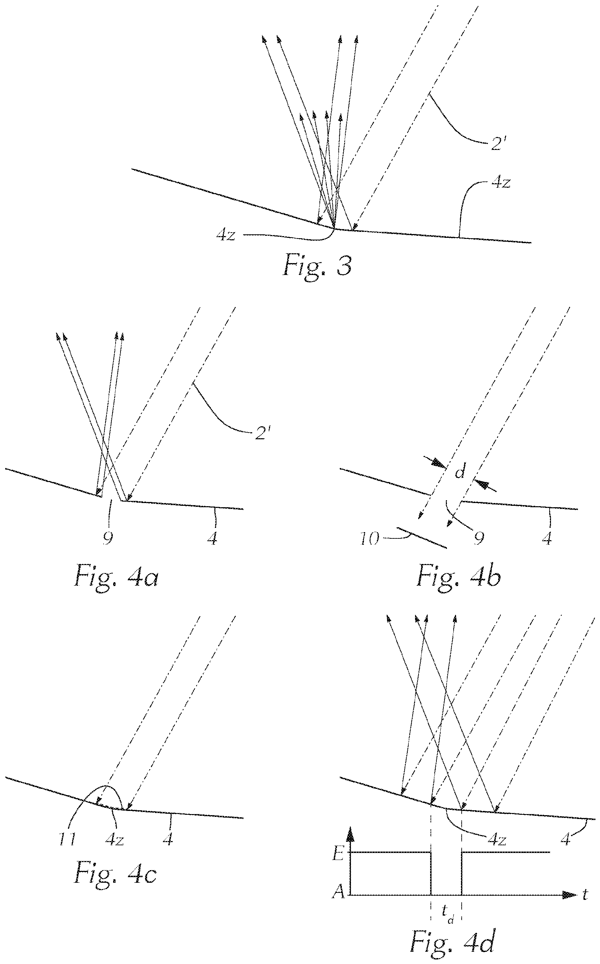

Es wird nun auf Fig. 3 Bezug genommen, welche wieder einen Bildfaltungsspiegel 4 mit einer Knicklinie 4z und einem von dem Mikrospiegel einlangenden Laserstrahl 2' darstellt. Im Bereich der Knicklinie ist herstellungsbedingt an dem Spiegel 4 immer mit Kantenverrundungen zu rechnen, d.h. es wird allgemein gesagt nie eine perfekte Kante vorliegen und daher ist genau in diesem Bereich, wenn der Laserstrahl 2' diesen durchläuft, mit Streulicht zu rechnen, wie durch vier, von der Knicklinie 4z, ausgehende Pfeile angedeutet ist.

Um diesen unerwünschten Effekt zu eliminieren, kann, wie in den Fig. 4a und 4b gezeigt, in dem Knickbereich bzw. im Zentrum eines kegelförmigen Spiegels eine Ausnehmung 9 vorgesehen sein, wobei gegebenenfalls dieser Ausnehmung 9 noch eine Absorberfläche 10 nachgeordnet sein kann. Die Ausnehmung 9 stört nicht, da mit Hilfe des entsprechenden Bereichs des Faltungsspiegels 4 ohnehin nur die jeweiligen Außenbereiche des Leuchtbildes erzeugt werden. Mit anderen Worten ist das Bildfaltungsmittel 4 in einem Bereich des Teilungs-/Faltungszentrums 4 nicht reflektierend ausgebildet.

Alternativ kann, wie in Fig. 4c dargestellt ist, der Spiegel in dem Knickbereich mit einer absorbierenden Beschichtung 11 ausgebildet sein. In Fig. 4d ist eine weitere Alternative zur Vermeidung des Streulichts im Knickbereich gezeigt, nämlich jene, dass der den Spiegel überstreichende Laserstrahl 2" in dem kritischen Bereich, der eine Abmessung d (Fig. 4b) haben möge, ausgeschaltet wird. Dies ist in dem Zeitdiagramm in Fig. 4d unterhalb des Spiegels 4 dargestellt, wobei man erkannt, dass die Laserlichtquelle, ausgehend von einem Einschaltzustand E während einer Zeitdauer td in einen ausgeschalteten Zustand A übergeführt wird.

Bezüglich dieser Abmessung d, die bei einem hohlkegelförmigen Spiegel einem Durchmesser d entspricht, ist es vorteilhaft, wenn dieser Abstand mindestens der Breite bzw. dem Durchmesser des Laserstrahls entspricht, damit es nicht zu einem Aufteilen des Laserstrahls auf beide Bildhälften kommen kann, wie dies in Fig. 4a durch je zwei eng nebeneinander liegende Strahlen gezeigt ist. Es versteht sich, dass diese Abmessung d dem Durchmesser eines Loches bei einem hohlkegelförmigen Spiegel oder der Breite einer Ausnehmung bzw. Öffnung 9 entsprechen kann und sein Äquivalent im "Zeitbereich" gemäß Fig. 4d besitzt. Die Knicklinien oder Spitzen können ganz allgemein auch als Teilung-/Faltungszentrum bezeichnet werden.

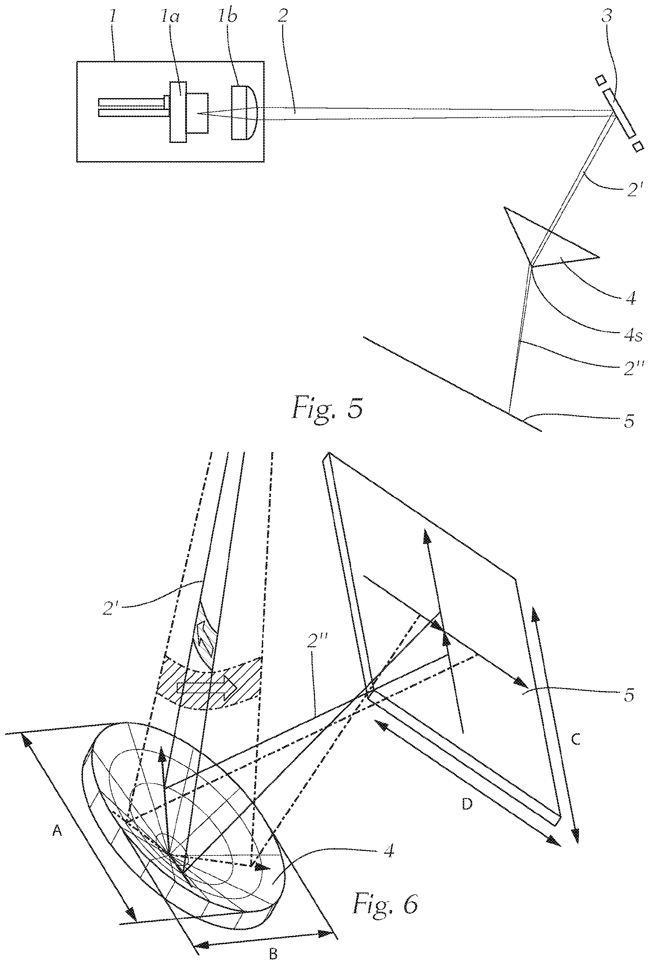

Die Darstellung nach Fig. 5 soll zeigen, dass das Bildfaltungsmittel 4 auch als Dreiecksprisma ausgebildet sein kann, wobei die Prismenspitze 4s, die der im Zusammenhang mit einen Bildfaltungsspiegel gezeigten Knicklinie 4z (Knickzentrum) entspricht. Auch hier können Maßnahmen getroffen werden, dass im Bereich der Spitze bzw. Spitzenlinie 4s des Prismas Streulicht vermieden wird, insbesondere durch das in Fig. 4c oder Fig. 4d gezeigte Austasten des Lasers.

In Fig. 6 ist zur besseren Veranschaulichung in vergrößerter Darstellung analog zu Fig. 1 gezeigt, wie die von einem Mikrospiegel eintreffenden Laserstrahlen 2' durch einen hohlkegelförmigen Spiegel, der als Bildfaltungsmittel 4 dient, abgelenkt und als abgelenkte Laserstrahlen 2" auf das Lichtkonversionsmittel 5 geworfen werden. Hier schwingt das Strahlablenkmitte bzw. der Mikrospiegel 3 in zwei zueinander orthogonalen Richtungen, hier als x- Richtung und y- Richtung bezeichnet, wobei das auf der Straße erzeugte Lichtbild 6' in der horizontalen x-Richtung typischerweise breiter ist, als das in der vertikalen y-Richtung. Die wirksamen Abmessungen des Bildfaltungsmittels 4 in x- und y-Richtung sind mit A und B bezeichnet, die korrespondierenden Abmessungen des Lichtkonversionsmittels 5 mit D und C.

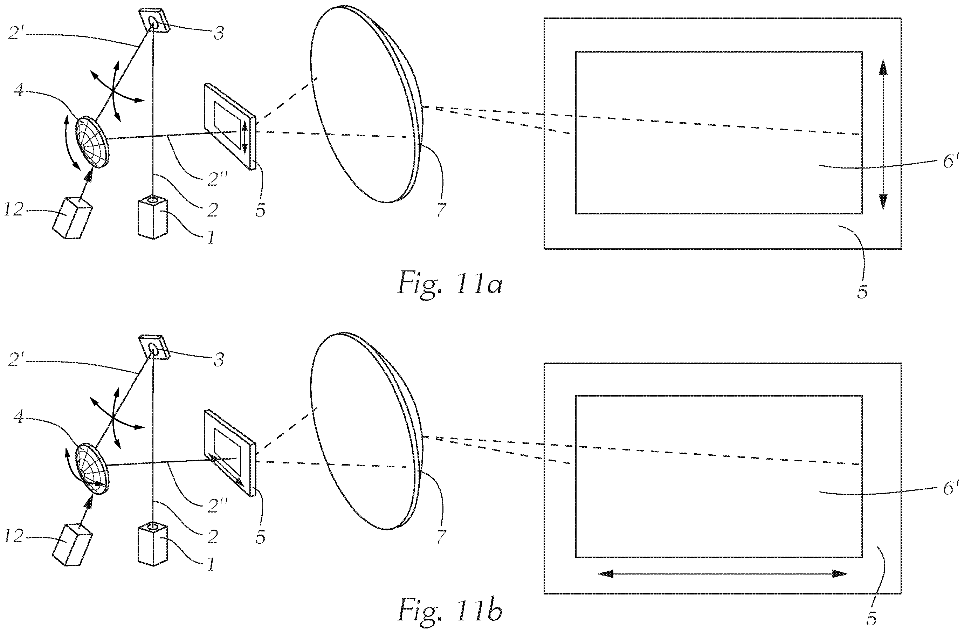

Das auf den Lichtkonversionsmittel 5 aufgescannte Bild wird somit ebenfalls eine längere und eine kürzere Seite besitzen und auch das Bildfaltungsmittel 4 muss daran angepasst werden. Demnach ist vorteilhafterweise das Verhältnis der Länge zur Breite des Lichtkonversionsmittels 5 gleich dem Länge/Breiteverhältnis des Bildfaltungsmittels 4, somit ist - auf Fig. 6 bezogen - A/B im Wesentlichen gleich C/D. Dabei handelt es sich natürlich um die optisch wirksamen Abmessungen des Bildfaltungsmittels 4 und des Lichtkonversionsmittels 5 in den Strahlablenkrichtungen. Allerdings muss beachtet werden, dass dies bei der Realisierung eines Kurvenlichtes bzw. einer Leuchtweitenverstellung, wie weiter unten im Zusammenhang mit Fig. 11a, b beschrieben, nicht mehr gilt, da dabei die Phosphorfläche des Lichtkonversionsmittels 5 um den Schwenkbereich des Bildfaltungsmittels 4 größer gemacht werden muss.

Wie bereits erwähnt, kann ein in x- und y-Richtung schwingender Mikrospiegel 3 verwendet werden, doch ist es auch möglich, einen nur in einer Koordinatenrichtung, z.B. der x-Richtung schwingenden Mikrospiegel zur Ablenkung des von der Laserlichtquelle ausgehenden Laserstrahls 2 zu verwenden, was besonders dann Sinn macht, wenn der Laserstrahl aufgefächert wird, um ein Lichtband zu erzeugen. In Fig. 7 erkennt man den Einfall eines derart aufgefächerten Laserstrahls 2' und seine Ablenkung an einem Bildfaltungsmittel 4, hier als Faltungsspiegel ausgebildet. Die von diesem Spiegel ausgehenden, geteilten und gefalteten Laserstrahlen 2, 2' erzeugen dann auf dem Lichtkonversionsmittel 5 als Lichtbild 6' ein Lichtband, das wieder so zusammengesetzt ist, dass seine hellen Bereiche in der Mitte liegen.

In den Fig. 8a, 8b und 8c werden drei verschiedene Ausführungsformen eines Bildfaltungsmittels 4 detaillierter gezeigt, nämlich in Fig. 8a die Ausbildung des Bildfaltungsmittels 4 als hohlkegelförmiger Spiegel, in Fig. 8b die Ausbildung des Bildfaltungsmittels 4 als Spiegel mit zwei ebenen Flächen und einer Knicklinie 4z und in Fig. 8c die Ausbildung eines Spiegels zur Teilung und Faltung eines Bildes bzw. der Laserstrahlen in zwei zueinander orthogonalen Koordinatenrichtungen, wobei notwendigerweise nicht nur eine erste Knicklinie 4z sondern auch eine zweite, dazu senkrechte Knicklinie 4z' vorhanden sind.

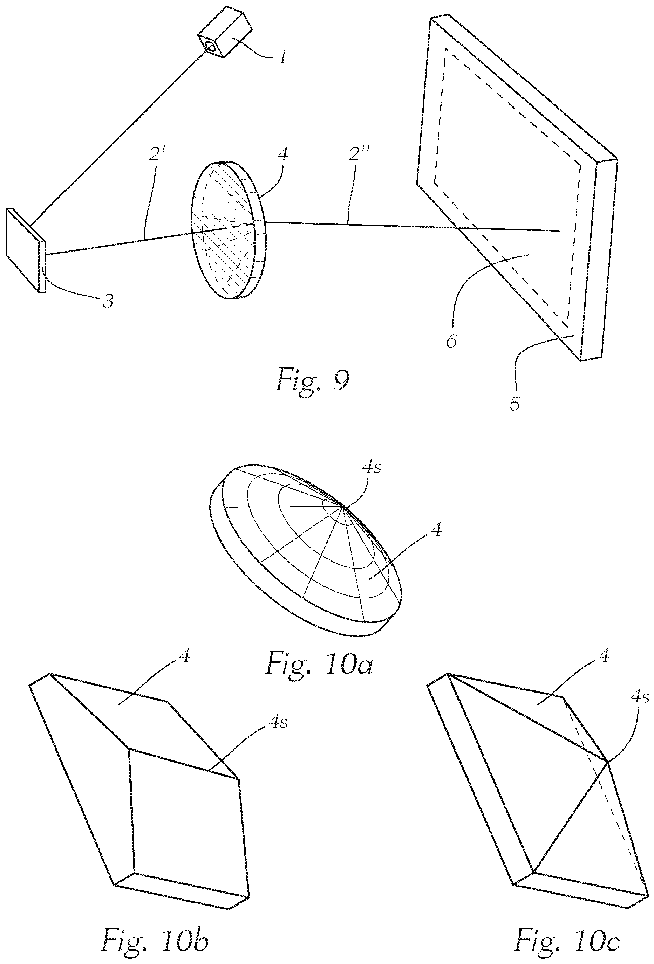

Fig. 9 zeigt den Strahlengang und die Bildteilung bzw. die Faltung bei Verwendung eines Bildfaltungsmittels 4, welches im vorliegenden Fall kegelförmiges Prisma gestaltet ist. Den Fig. 10a, 10b und 10c sind weitere Ausbildungen des Bildfaltungsmittels 4 als Prismen zu entnehmen, deren Funktion im Wesentlichen den in den Fig. 8a, 8b und 8c gezeigten Bildfaltungsmitteln, die dort als Spiegel ausgebildet sind, entsprechen. Fig. 10a zeigt, das in Fig. 9 bereits dargestellte Bildfaltungsmittel 4, nämlich ein kegelförmiges Prisma, Fig. 10b ein dreieckförmiges Prisma mit der spitzen Linie 4s zur Teilung und Faltung in einer Koordinatenrichtung und Fig. 10c zeigt schließlich ein pyramidenförmiges Prisma 10c zur Ablenkung bzw. Teilung und Faltung in zwei Koordinatenrichtungen, mit einer Spitze 4s.

Man kann von dem Vorhandensein des Bildfaltungsmittels 4 auch eine weitere Funktion ableiten, was in den Fig. 11a und 11b gezeigt ist. Dazu sieht man vor, was jedoch im Detail nicht gezeigt ist, dass das Bildfaltungsmittel 4, in Fig. 11a und 11b ein Spiegel, in zumindest einer Koordinatenrichtung beweglich gelagert und durch einen Aktuator 12 verstellbar ist. In Fig. 11a ist angedeutet, dass eine Leuchtweitenregulierung erfolgen kann, wenn man das Bildfaltungsmittel, nämlich den Spiegel 4, so verschwenkt, dass auch der scannende und auf das Lichtkonversionsmittel 5 auftreffende Laserstrahl 2' in der Höhe verschwenkt wird und nach Durchlaufen des Projektionssystems 7 zu einem entsprechenden Verschwenken des Lichtbildes 6' in Höhenrichtung führt.

Analog dazu ist in Fig. 11b ein Verschwenken in Seitenrichtung zur Realisierung eines Kurvenlichtes dargestellt, d.h. ein Verschwenken des als Spiegel ausgebildeten Bildfaltungsmittels 4 führt hier zu einem Links-Rechts-Verschwenken des Lichtbildes 6'.

## Patentansprüche

1. Verfahren zum Erzeugen einer Lichtverteilung auf einer Fahrbahn (8) mit Hilfe eines KFZ-Scheinwerfers, bei welchem zumindest ein in seiner Intensität modulierbarer Laserstrahl (2) mit Hilfe zumindest eines angesteuerten Strahlablenkmittels (3) in zumindest einer Koordinatenrichtung scannend auf ein Lichtkonversionsmittel (5) gelenkt wird, um an diesem ein Leuchtbild (6) zu erzeugen, das mit Hilfe einer Projektionsoptik (7) als Lichtbild (6') auf die Fahrbahn projiziert wird, wobei das aus dem Laserstrahl (2) mit Hilfe des Strahlablenkmittels (3) erzeugte Bild durch Umlenkung des Laserstrahls (2') mittels eines Bildfaltungsmittels (4) geteilt wird und die Teilbilder spiegelbildlich zu einer Teilungslinie auf das Lichtkonversionsmittel (5) zu einem gesamten Leuchtbild (6) zusammengesetzt projiziert werden, wobei der Laserstrahl (2) in einem Bereich eines Teilungs-/Faltungszentrums (4z) des Bildfaltungsmittels (4) optisch/elektrisch ausgeblendet wird.

2. Verfahren nach Anspruch 1, **dadurch gekennzeichnet, dass** der Laserstrahl (2) mit Hilfe des Strahlablenkmittels (3) in zwei zueinander im Wesentlichen orthogonale Richtungen abgelenkt wird.

3. Verfahren nach Anspruch 1 oder 2, **dadurch gekennzeichnet, dass** der Laserstrahl (2, 2', 2") zur Erzeugung eines Lichtbandes als Leuchtbild (6, 6') aufgefächert wird.

4. Verfahren nach Anspruch einem der Ansprüche 1 bis 3, **dadurch gekennzeichnet, dass** das Bildfaltungsmittels (4) zum Verschieben des Leuchtbildes bzw. Lichtbildes (6 bzw. 6') in zumindest einer Koordinatenrichtung mit Hilfe eines Aktuators (12) verstellt wird.

5. Verfahren nach einem der Ansprüche 1 bis 4, **dadurch gekennzeichnet, dass** durch Änderung des Abstandes des Bildfaltungsmittels (4) von dem Lichtkonversionsmittel (5) der Abstand der Teilbilder voneinander bestimmt wird.

6. Scheinwerfer für Kraftfahrzeuge mit zumindest einer Laserlichtquelle (1), deren Laserstrahl (2) über ein Strahlablenkmittel (3) scannend auf zumindest ein Lichtkonversionsmittel (5) gelenkt wird, welches einen Phosphor zur Lichtkonversion aufweist, und mit einem Projektionssystem (7) zur Projektion des an dem zumindest einem Lichtkonversionsmittel erzeugten Leuchtbildes (6) als Lichtbild (6') auf die Fahrbahn (8), wobei zwischen dem Strahlablenkmittel (3) und dem Lichtkonversionsmittel (5) ein Bildfaltungsmittel (4) angeordnet ist, wobei das aus dem Laserstrahl (2) mit Hilfe des Strahlablenkmittels (3) erzeugte Bild durch Umlenkung des Laserstrahls (2') mittels des Bildfaltungsmittels (4) geteilt wird und die Teilbilder spiegelbildlich zu einer Teilungslinie auf das Lichtkonversionsmittel (5) zu einem gesamten Leuchtbild (6) zusammengesetzt projiziert werden,
wobei das Bildfaltungsmittel (4) in einem Bereich eines Teilungs-/Faltungszentrums (4z) nicht reflektierend ausgebildet ist oder der Laserstrahl (2) in einem Bereich eines Teilungs-/ Faltungszentrums (4z) optisch oder elektrisch ausgeblendet wird.

7. Scheinwerfer nach Anspruch 6, **dadurch gekennzeichnet, dass** der Bereich des Teilungs-/Faltungszentrums (4) eine Abmessung (d) aufweist, die zumindest der Breite des Laserstrahls entspricht.

8. Scheinwerfer nach Anspruch 6 oder 7, **dadurch gekennzeichnet, dass** das Bildfaltungsmittel (4) als hohlkegelförmiger Spiegel ausgebildet ist und im Zentrum des Spiegels eine Ausnehmung (9) vorgesehen ist.

9. Scheinwerfer nach Anspruch 6, **dadurch gekennzeichnet, dass** das Bildfaltungsmittel (4) als Spiegel mit zumindest zwei zueinander unter einem Winkel (β) geneigten ebenen Flächen ausgebildet ist.

10. Scheinwerfer nach Anspruch 9, **dadurch gekennzeichnet, dass** der Winkel (β) 5° bis 45°, bevorzugt zwischen 10° und 15° beträgt.

11. Scheinwerfer nach Anspruch 6, **dadurch gekennzeichnet, dass** das Bildfaltungsmittel (4) als kegelförmiges Prisma oder als Dreiecksprisma bzw. Pyramidenprisma ausgebildet ist.

12. Scheinwerfer nach einem der Ansprüche 6 bis 11, **dadurch gekennzeichnet, dass** das Verhältnis der optisch wirksamen Abmessungen des Bildfaltungsmittels (4) und des Lichtkonversionsmittels (5) in zwei Strahlablenkrichtungen zumindest annähernd gleich ist.

13. Scheinwerfer nach Anspruch einem der Ansprüche 6 bis 12, **dadurch gekennzeichnet, dass** das Bildfaltungsmittel (4) in zumindest einer Koordinatenrichtung beweglich gelagert und mit Hilfe eines Aktuators (12) verstellbar ist.

## Claims

1. A method for creating a light distribution on a carriageway (8) with the aid of a motor vehicle headlamp, in which at least one laser beam (2), the intensity of which can be modulated, is deflected in a scanning manner with the aid of at least one controlled beam deflection means (3) in at least one coordinate direction onto a light conversion means (5), in order to create a luminous image (6) on the same, which is projected with the aid of projection optics (7) onto the carriageway as a light image (6'), the image created from the laser beam (2) with the aid of the beam deflection means (3) being divided by deflection of the laser beam (2') by means of an image convolution means (4) and the partial images being projected in a composite manner as a mirror image with respect to a dividing line onto the light conversion means (5) to form an overall luminous image (6), the laser beam (2) being optically/electrically hidden in a region of a division/convolution centre (4z) of the image convolution means (4).

2. The method according to claim 1, **characterized in that** the laser beam (2) is deflected with the aid of the beam deflection means (3) in two directions, which are substantially orthogonal to one another.

3. The method according to claim 1 or 2, **characterized in that** the laser beam (2, 2', 2") is fanned out for creating a light strip as a luminous image (6, 6').

4. The method according to one of claims 1 to 3, **characterized in that** the image convolution means (4) is adjusted with the aid of an actuator (12) for displacing the luminous image or light image (6 or 6') in at least one coordinate direction.

5. The method according to one of claims 1 to 4, **characterized in that** the distance of the partial images from one another is determined by changing the distance of the image convolution means (4) from the light conversion means (5).

6. A headlamp for motor vehicles having at least one laser light source (1), the laser beam (2) of which is deflected by means of a beam deflection means (3) in a scanning manner onto at least one light conversion means (5), which has a phosphor for light conversion, and having a projection system (7) for the projection of the luminous image (6) created at the at least one light conversion means as a light image (6') onto the carriageway (8), an image convolution means (4) being arranged between the beam deflection means (3) and the light conversion means (5), the image created from the laser beam (2) with the aid of the beam deflection means (3) being divided by deflection of the laser beam (2') by means of the image convolution means (4) and the partial images being projected in a composite manner as a mirror image with respect to a dividing line onto the light conversion means (5) to form an overall luminous image (6), the image convolution means (4) being constructed in a non-reflective manner in a region of a division/convolution centre (4z) or the laser beam (2) being optically or electrically hidden in a region of a division/convolution centre (4z).

7. The headlamp according to claim 6, **characterized in that** the region of the division/convolution centre (4) has a dimension (d), which at least corresponds to the width of the laser beam.

8. The headlamp according to claim 6 or 7, **characterized in that** the image convolution means (4) is constructed as a hollow conical mirror and a recess (9) is provided at the centre of the mirror.

9. The headlamp according to claim 6, **characterized in that** the image convolution means (4) is constructed as a mirror having at least two planar surfaces, which are inclined at an angle (β) to one another.

10. The headlamp according to claim 9, **characterized in that** the angle (β) is 5° to 45°, preferably between 10° and 15°.

11. The headlamp according to claim 6, **characterized in that** the image convolution means (4) is constructed as a conical prism or as a triangular prism or pyramid prism.

12. The headlamp according to one of claims 6 to 11, **characterized in that** the ratio of the optically effective dimensions of the image convolution means (4) and the light conversion means (5) is at least approximately equal in two beam deflection directions.

13. The headlamp according to one of claims 6 to 12, **characterized in that** the image convolution means (4) is mounted in a movable manner in at least one coordinate direction and can be adjusted with the aid of an actuator (12).

## Revendications

1. Procédé de réalisation d'une distribution de lumière sur une chaussée (8) au moyen d'un phare de véhicule automobile, dans lequel au moins un faisceau laser (2) modulable en intensité est dirigé à l'aide d'au moins un moyen de déviation de faisceau commandé (3) dans au moins une direction de coordonnées en balayant un moyen de conversion de lumière (5), afin de produire sur celui-ci une image illuminée (6), qui est projetée sur la chaussée à l'aide d'une optique de projection (7) comme une photographie (6'), dans lequel l'image générée à partir du faisceau laser (2) à l'aide du moyen de déviation de faisceau (3) est divisée par déviation du faisceau laser (2') au moyen d'un moyen de convolution d'images (4) et les images partielles sont projetées symétriquement par rapport à une ligne de division sur le moyen de conversion de lumière (5) en étant assemblées en une image illuminée complète (6), dans lequel le faisceau laser (2) est masqué optiquement/électriquement dans une zone d'un centre de division/convolution (4z) du moyen de convolution d'images (4).

2. Procédé selon la revendication 1, **caractérisé en ce que** le faisceau laser (2) est dévié à l'aide du moyen de déviation de faisceau (3) dans deux directions essentiellement orthogonales l'une par rapport à l'autre.

3. Procédé selon la revendication 1 ou 2, **caractérisé en ce que** le faisceau laser (2, 2', 2") est étalé afin de générer une bande lumineuse comme image illuminée (6, 6').

4. Procédé selon une des revendications 1 à 3, **caractérisé en ce que** le moyen de convolution d'image (4) est réglé afin de décaler l'image illuminée respectivement la photographie (6, rep. 6') d'au moins une direction de coordonnées à l'aide d'un actionneur (12).

5. Procédé selon une des revendications 1 à 4, **caractérisé en ce que** en modifiant l'espacement du moyen de convolution d'images (4) par rapport au moyen de conversion d'images (5) l'espacement des images partielles les unes par rapport aux autres est déterminé.

6. Phare pour véhicule automobile comportant au moins une source de lumière laser (1), dont le faisceau laser (2) est dirigé par l'intermédiaire d'un moyen de déviation de faisceau (3) en balayant au moins un moyen de conversion de lumière (5) qui présente un phosphore pour la conversion de lumière, et comportant un système de projection (7) pour la projection de l'image illuminée (6) générée sur au moins un moyen de conversion de lumière comme une photographie (6') sur la chaussée (8), dans lequel entre le moyen de déviation de faisceau (3) et le moyens de conversion de lumière (5) un moyen de convolution d'images (4) est disposé, dans lequel l'image générée à partir du faisceau laser (2) à l'aide du moyen de déviation de faisceau (3) est divisée en déviant le faisceau laser (2') au moyen du moyen de convolution d'images (4) et les images partielles sont projetées symétriquement par rapport à une ligne de division sur le moyen de conversion de lumière (5) en étant assemblées en une image illuminée complète (6), dans lequel le moyen de convolution d'images (4) n'est pas conçu de manière réfléchissante dans une zone d'un centre de division/ convolution (4z) ou le faisceau laser (2) est masqué optiquement ou électriquement dans une zone d'un centre de division/convolution (4z).

7. Phare selon la revendication 6, **caractérisé en ce que** la zone du centre de division/convolution (4) présente une dimension (d), qui correspond au moins à la largeur du faisceau laser.

8. Phare selon la revendication 6 ou 7, **caractérisé en ce que** le moyen de convolution d'image (4) est configuré comme un miroir en forme de cône creux et au centre du miroir un évidement (9) est prévu.

9. Phare selon la revendication 6, **caractérisé en ce que** le moyen de convolution d'image (4) est configuré comme un miroir avec au moins deux surfaces planes inclinées l'une par rapport à l'autre en formant un angle (β).

10. Phare selon la revendication 9, **caractérisé en ce que** l'angle (β) est compris dans une plage de 5° à 45°, de préférence entre 10° et 15°.

11. Phare selon la revendication 6, **caractérisé en ce que** le moyen de convolution d'images (4) est configuré comme un prisme en forme de cône ou comme un prisme triangulaire, respectivement un prisme pyramidal.

12. Phare selon une des revendications 6 à 11, **caractérisé en ce que** le rapport des dimensions optiques efficaces du moyen de convolution d'images (4) et du moyen de conversion de lumière (5) sont au moins approximativement identiques dans deux directions de déviation de faisceau.

13. Phare selon une des revendications 6 à 12, **caractérisé en ce que** le moyen de convolution d'images (4) est positionné de manière mobile dans au moins une direction de coordonnées et peut être réglé à l'aide d'un actionneur (12).
